# EUROPÄISCHE PATENTSCHRIFT

(11) **EP 2 103 369 B1**
(45) Veröffentlichungstag und Bekanntmachung des Hinweises auf die Patenterteilung: **08.12.2010**
(21) Anmeldenummer: 08003650.2
(22) Anmeldetag: 28.02.2008
(51) Int. Cl.: B23B 31/20

(54) **Dehnspannfutter**
Expansion chuck
Mandrin expansible

(43) Veröffentlichungstag der Anmeldung: 23.09.2009
(73) Patentinhaber: Schunk GmbH & Co. KG Spann- und Greiftechnik, 74348 Lauffen (DE)
(72) Erfinder: Retzbach, Thomas, 74357 Bönningheim (DE); Peter, Ralph, 74348 Lauffen (DE)
(74) Vertreter: Paul, Dieter-Alfred

(56) Entgegenhaltungen:
- DE-A1- 3 615 743
- DE-B- 1 141 157
- GB-A- 1 062 108

## Beschreibung

Die vorliegende Erfindung betrifft ein Dehnspannfutter mit einem im wesentlichen formsteifen Futterkörper, der an seinem einen axialen Ende eine Dehnbüchse trägt, welche eine zentrale Aufnahme für ein zu spannendes Bauteil bildet und außenseitig von wenigstens einer Druckkammer begrenzt ist, die mit einem Hydraulikmittel aufschlagbar ist, um die Dehnbüchse elastisch nach innen zu verformen. Des weiteren betrifft die vorliegende Erfindung ein Verfahren zum Betätigen eines solchen Dehnspannfutters.

Dehnspanneinrichtungen dieser Art sind beispielsweise aus DE 10 2005 055 622 B3 bekannt und werden in der Praxis eingesetzt, um ein Werkzeug wie beispielsweise ein Fräs- oder Bohrwerkzeug an der Arbeitsspindel einer entsprechenden Werkzeugmaschine zu fixieren. Hierzu wird der Schaft des zu spannenden Werkzeugs in die Aufnahme des Dehnspannfutters eingesetzt und anschließend in der die Aufnahme ringförmig umgebenden Druckkammer ein Hydraulikdruck aufgebaut, so dass die Dehnbüchse elastisch nach innen verformt wird und den Werkzeugschaft in der Aufnahme fixiert.

Die bekannten Dehnspanneinrichtungen haben sich in der Praxis durchaus bewährt. Ein Problem besteht jedoch darin, dass die Durchmesser der Aufnahme sowie des zu spannenden Werkzeugschafts zu einander in der Weise korrespondieren müssen, dass der Schaft über den erzielbaren Spannweg sicher gespannt werden kann. Dies hat zur Folge, dass für jeden Schaftdurchmesser ein eigenes Dehnspannfutter vorhanden sein muss.

Aufgabe der vorliegenden Erfindung ist es, ein Dehnspannfutter der eingangs genannten Art so auszugestalten, dass er flexibel einsetzbar ist und insbesondere die Möglichkeit besteht, Werkzeuge mit unterschiedlichen Schaftdurchmessern zu spannen.

Diese Aufgabe ist erfindungsgemäß dadurch gelöst, dass in die zentrale Aufnahme eine Spannhülse eingesetzt ist, welche in radialer Richtung elastisch verformbar ist in dem die Dahnbüchse durch Beaufschlagung der Druckkammer mit hydraulickmittel nach innen verformt wird, und der Spannhülse ein Stellglied zugeordnet ist, um die Spannhülse axial in der Aufnahme zu verstellen, wobei die Spannhülse an ihrer Außenfläche Eingriffsflächen aufweist, die mit entsprechenden Gegenflächen der Aufnahme derart zusammen wirken, dass die Spannhülse elastisch nach innen verformt wird, wenn sie axial in den Futterkörper bewegt wird. Bei diesem Dehnspannfutter wird ein Werkzeugschaft mit einem vorgegebenen Durchmesser gespannt, indem die Spannhülse mittels des Stellglieds in der Aufnahme des Futterkörpers so positioniert wird, dass der Innendurchmesser der Spannhülse zum Schaftdurchmesser korrespondiert und der Schaft mit wenig Spiel in die Spannhülse eingeschoben werden kann, und im Anschluss daran der Spannvorgang allein durch Druckbeaufschlagung der Druckkammer erfolgt.

Der Erfindung liegt die Überlegung zugrunde, die Funktionalität eines sogenannten Spannzangenfutters mit der eines Dehnspannfutters zu kombinieren. Hierzu wird in die Aufnahme des Dehnspannfutters eine Spannhülse eingesetzt, deren Bohrung die eigentliche Aufnahme für das zu spannende Werkzeug bildet. Der Durchmesser dieser Bohrung kann verändert werden, indem die Spannhülse innerhalb der Aufnahme des Dehnspannfutters mittels des Stellglieds axial verstellt wird. Die Axialverstellung hat zur Folge, dass das durch das Zusammenwirken der insbesondere konusförmigen Eingriffsflächen der Spannhülse und Gegenflächen der Aufnahme die Spannhülse elastisch zusammengedrückt bzw. aufgeweitet wird. Mit anderen Worten wird durch eine axiale Positionierung der Spannhülse in dem Dehnspannfutter der Durchmesser der Bohrung der Spannhülse und damit der eigentlichen Aufnahme für das zu spannende Werkzeug voreingestellt, so dass ein Schaft eines zu spannenden Werkzeugs oder dergleichen in sie eingeschoben werden kann. Der eigentliche Spannvorgang erfolgt anschließend, indem die Druckkammer des Dehnspannfutters mit Druck beaufschlagt wird. Hierdurch wird die dünnwandige Dehnhülse nach innen verformt. Dies hat zur Folge, dass auch die an der Dehnhülse innen anliegende Spannhülse nach innen verformt wird, um den Werkzeugschaft in der Bohrung der Spannhülse zu fixieren.

Der Einsatz der Spannhülse bietet dabei die Möglichkeit, die Größe der eigentlichen Aufnahme für das zu spannende Bauteil bzw. Werkzeug in einem vergleichsweise großen Bereich einzustellen, so dass auch Werkzeuge mit unterschiedlichen Schaftdurchmesser gespannt werden können.

Gemäß einer Ausführungsform der vorliegenden Erfindung ist vorgesehen, dass die zentrale Aufnahme des Dehnspannfutters von dem freien Ende des Futterkörpers in Richtung des spindelseitigen Endes konusartig zulaufend ausgebildet ist. In entsprechender Weise können die Eingriffsflächen an der Außenseite der Spannhülse zum spindelseitigen Ende hin zulaufenden Konusflächen liegen und die Außenfläche insbesondere konusförmig ausgebildet sein. Auf diese Weise wird eine flächige Anlage zwischen der Aufnahme einerseits und der Außenfläche der Spannhülse andererseits gewährleistet und damit sichergestellt, dass die Spannhülse gleichmäßig abgestützt und verformt wird.

Das Stellglied kann in an sich bekannter Weise eine auf den Futterkörper aufgeschraubte und mit der Spannhülse in Eingriff stehende Überwurfmutter sein. Diese Anordnung ermöglicht es, die Spannhülse in einfacher Weise axial zu verstellen und zu positionieren, indem die Überwurfmutter auf den Futterkörper aufgeschraubt und von diesem abgeschraubt wird.

Gemäß einer bevorzugten Ausführungsform der Erfindung ist vorgesehen, dass die wenigstens eine Druckkammer an ihrem zum freien Ende des Futterkörpers weisenden Ende hin eine Verbreiterung in radialer Richtung aufweist. Hierdurch wird erreicht, dass eine Beaufschlagung der Druckkammer nicht nur dazu führt, dass die Dehnspannhülse nach innen verformt wird, sondern auch ein Druck in axialer Richtung erzeugt wird. Dies hat zur Folge, dass der Futterkörper und die Überwurfmutter über die Spannhülse miteinander verspannt werden und das gespannte Werkzeug insbesondere im vorderen Bereich in der Bohrung der Spannhülse fixiert wird.

In weiterer Ausgestaltung dieser Ausführungsform kann vorgesehen sein, dass sich der Querschnitt der Druckkammer zum freien Ende des Futterkörpers hin kontinuierlich verbreitet.

In ähnlicher Weise kann die Dehnhülse in dem Futterkörper verschiebbar gehalten sein, wobei dann die mindestens eine Druckkammer an ihrem spindelseitigen Endbereich die Dehnbüchse derart hintergreift, dass diese axial zum freien Ende des Grundkörpers gegen die Spannhülse gedrückt wird, wenn in der Druckkammer ein Druck aufgebaut wird. Auch bei dieser Ausführungsform wird auf die Spannhülse während des Spannvorgangs eine axiale Kraft ausgeübt, durch welche der Futterkörper und die Überwurfmutter mit der Spannhülse verspannt werden.

Hinsichtlich weiterer vorteilhafter Ausgestaltung der Erfindung wird auf die Unteransprüche sowie nachfolgende Beschreibung eines Ausführungsbeispiels unter Bezugnahme auf die beiliegenden Zeichnungen verwiesen. In der Zeichnung zeigt
- Figur 1: eine erste Ausführungsform eines Dehnspannfut- ters gemäß der vorliegenden Erfindung in teil- weise geschnittener Vorderansicht,
- Figur 2: eine zweite Ausführungsform eines erfindungsge- mäßen Dehnspannfutters in Schnittansicht,
- Figur 3: eine dritte Ausführungsform eines erfindungsge- mäßen Dehnspannfutters im Längsschnitt und
- Figur 4: eine vierte Ausführungsform eines erfindungsge- mäßen Dehnspannfutters im Längsschnitt.

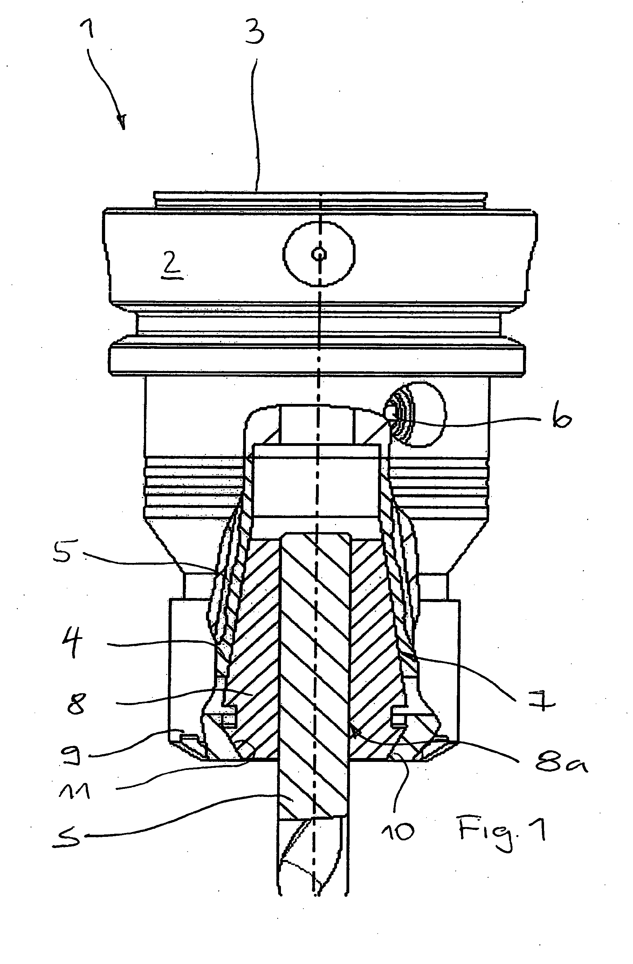

In der Figur 1 ist eine Ausführungsform eines Dehnspannfutters gemäß der vorliegenden Erfindung dargestellt, das beispielsweise eingesetzt werden kann, um einen Bohrer- oder Fräserschaft an der Arbeitsspindel einer Werkzeugmaschine zu fixieren. Das Dehnspannfutter 1 umfasst einen Futterkörper 2 aus einem formsteifen Material, der an seinem in der Zeichnung oberen Endbereich in an sich bekannter Weise eine Schnittstelle 3 zur Fixierung an einer angetriebenen Arbeitsspindel einer Werkzeugmaschine aufweist. An dem anderen axialen Ende des Futterkörpers 2 ist eine dünnwandige Dehnbüchse 4 ausgebildet, die hier einteilig mit dem Futterkörper 2 ausgebildet ist. Die Dehnbüchse 4 ist an einen nicht dargestellten Hydraulikmittelkanal angeschlossen, der an seinem einen Ende in die Druckkammer 5 mündet und an seinem anderen Ende durch eine Betätigungsschraube 6 verschlossen ist und auf einen in den Hydraulikmittelkanal eingesetzten Kolben drückt. Der Hydraulikmittelkanal und die Druckkammer 5 sind mit einem Hydraulikmittel wie beispielsweise Öl gefüllt. Wenn die Betätigungsschraube 6 in den Hydraulikmittelkanal eingedreht wird, wird das Öl verdichtet und übt einen Druck auf die Innenseite der Dehnbüchse 4 aus, wodurch diese elastisch nach innen verformt wird.

Die Dehnhülse 4 bildet an ihrer Innenseite eine Aufnahme 7, die zu ihrem spindelseitigen Ende hin konusförmig zuläuft, und in diese Aufnahme 7 ist eine Spannhülse 8 - auch Spannzange genannt - eingesetzt, die an ihrem Außenumfang eine der Aufnahme 7 entsprechende Konusform besitzt und in radialer Richtung elastisch verformbar ist. Die Spannhülse 8 wird an dem Futterkörper 2 durch eine Überwurfmutter 9 gehalten, die auf einen nicht dargestellten Gewindeabschnitt am freien Ende des Futterkörpers 2 aufgeschraubt ist. Die Überwurfmutter 9 übergreift das aus der Aufnahme 7 ragende vordere Ende der Spannhülse 8 und stützt sich mit einer konusförmigen Anlagefläche 10 an einer entsprechend konusförmigen Gegenfläche 11 der Spannhülse 8 ab. Wenn die Überwurfmutter 9 auf den Futterkörper 2 aufgeschraubt wird, wird die Spannhülse 8 axial in die Aufnahme 7 gedrückt, wobei die konusförmige Außenfläche der Spannhülse 8 und die konusförmige Innenfläche der Aufnahme 7 miteinander in der Weise in Eingriff stehen und zusammen wirken, dass die Axialbewegung der Spannhülse 8 in eine radiale Verformung von der Hülse umgesetzt wird. Diese radiale Verformung führt dazu, dass sich der Durchmesser der Durchgangsbohrung 8a der Spannhülse 8 verkleinert. Mit anderen Worten kann durch eine entsprechende axiale Positionierung der Spannhülse 8 mittels der Überwurfmutter 9 der Durchmesser der Durchgangsbohrung 8a der Spannhülse 8 eingestellt werden, so dass Werkzeugschäfte unterschiedlicher Durchmesser gespannt werden können.

Wenn also ein Werkzeugschaft S mit einem vorgegebenen Durchmesser gespannt werden soll, wird zunächst die Spannhülse 8 durch Betätigung der Überwurfmutter 9 so positioniert, dass der Innendurchmesser der Spannhülse 8 dem Durchmesser des zu spannenden Schafts 5 entspricht. Anschließend wird der Werkzeugschaft S in die Spannhülse 8 eingesetzt und fixiert, indem innerhalb der Druckkammer 5 durch Verstellung der Betätigungsschraube 6 ein Druck aufgebaut wird. Dieser Druckaufbau hat zur Folge, dass die Dehnspannhülse 4 und damit auch die an dieser innen anliegende Spannhülse 8 elastisch nach innen verformt wird und den Werkzeugschaft S fixiert.

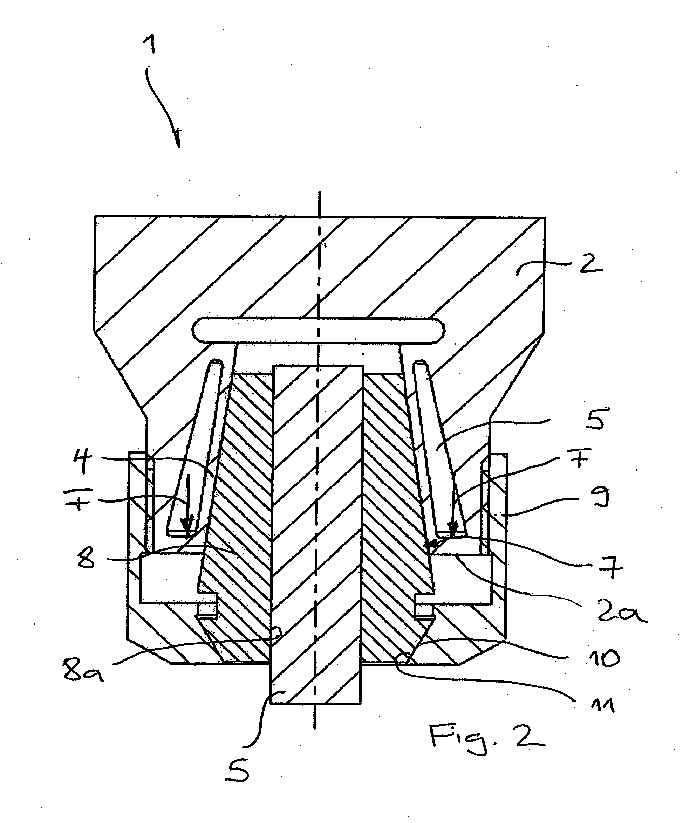

Die in Figur 2 dargestellte Ausführungsform besitzt den gleichen Grundaufbau wie das Dehnspannfutter 1, welches in der Figur 1 dargestellt und vorstehend beschrieben ist. Der einzige Unterschied besteht in der Ausgestaltung der die Dehnhülse 4 ringförmig umgebenden Druckkammer 5. Diese besitzt bei der in Figur 2 dargestellten Ausführungsform einen Querschnitt, der vom spindelseitigen hinteren Ende zum vorderen Ende hin kontinuierlich in der Breite - d.h. radial - zunimmt. Die Verbreiterung am vorderen Ende hat zur Folge, dass bei einem Druckaufbau innerhalb der Druckkammer 5 nicht nur die Dehnhülse 4 nach innen verformt wird, sondern auch eine Axialkraft F auf die Dehnhülse 4 bzw. den vorderen Steg 2a des Futterkörpers 2 wirkt. Durch diese Axialkraft F wird die Spannhülse 8 gegen die Überwurfmutter 9 gedrückt, wodurch der Futterkörper 2 und die Überwurfmutter 9 miteinander verspannt werden. Die geneigte Anlage- und Gegenflächen 10, 11 von Spannhülse 8 und Überwurfmutter 9 bewirken zusätzlich, dass die Axialkraft am vorderen Endbereich der Spannhülse 8 in eine nach innen gerichtete elastische Verformung der Spannhülse 8 umgesetzt wird und diese den Werkzeugschaft S zusätzlich fixiert.

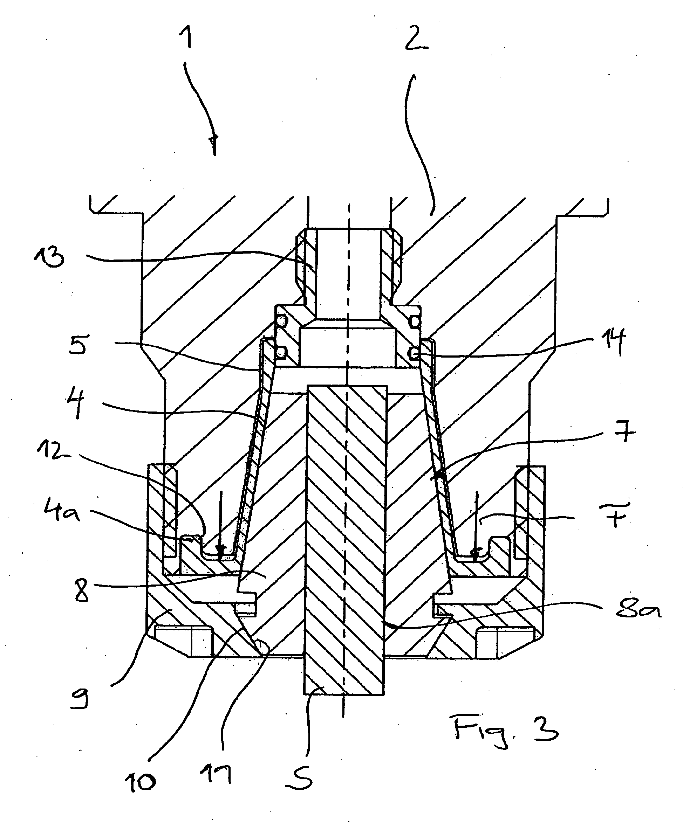

Die Figur 3 zeigt eine dritte Ausführungsform eines erfindungsgemäßen Dehnspannfutters 1, welches im wesentlichen der in Figur 2 dargestellten zweiten Ausführungsform entspricht. Allerdings ist bei der dritten Ausführungsform die Dehnhülse 4 nicht einstückig mit dem Futterkörper 2 ausgebildet. Vielmehr ist die Dehnhülse 4 hier ein separates Bauteil, welches in den Futterkörper 2 eingesetzt und daran fixiert ist. Hierzu besitzt die Dehnhülse 4 an ihrem vorderen Endbereich einen umlaufenden Ringsteg 4a, der in einer korrespondierenden Nut 12 in der Stirnfläche des Futterkörpers 2 eingreift und darin festgelötet ist. Das hintere Ende sitzt verschieblich auf einem in den Futterkörper 2 eingeschraubten Einsatz 13 und ist gegenüber diesem durch Dichtungsmittel hier in der Form eines Ohrrings 14 abgedichtet.

Auch bei dieser dritten Ausführungsform besitzt die Druckkammer 4 an ihrem vorderen Ende eine Verbreiterung in radialer Richtung, so dass die Dehnbüchse 4 bei einem Druckaufbau innerhalb der Druckkammer 4 auch axial belastet wird mit der Folge, dass die Spannhülse 8 gegen die Überwurfmutter 9 gedrückt wird.

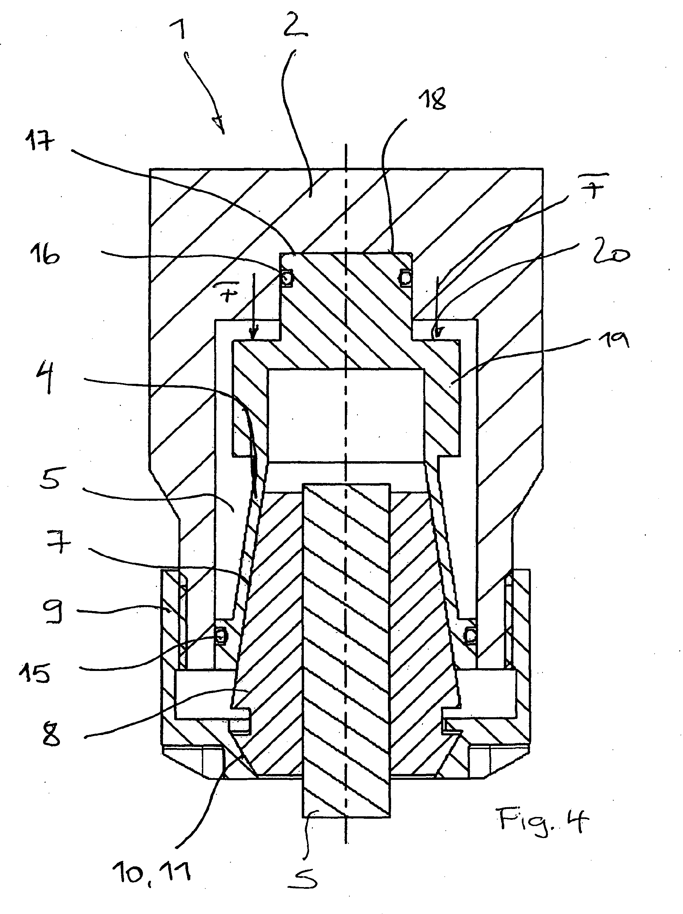

Bei der in Figur 4 dargestellten vierten Ausführungsform ist die Dehnhülse 4 ebenfalls ein separates Bauteil, das an einem Halteteil 19 ausgebildet ist. Das Halteteil 19 mit der Dehnhülse 4 ist sowohl an seinem vorderen, als auch an seinem spindelseitigen hinteren Endbereich verschiebbar in dem Futterkörper 2 gehalten. Hierzu besitzt das Halteteil 19 an seinem hinteren Ende einen Ansatz 17, der in eine entsprechende Ausnehmung 18 des Futterkörpers 2 eingreift und darin verschiebbar geführt ist, wobei der dazwischen liegende Ringspalt durch einen Ohrring 16 abgedichtet ist. Am vorderen Endbereich ist die Dehnhülse 4 axial verschiebbar in dem Futterkörper 2 geführt und ebenfalls über einen Ohrring gegenüber diesem abgedichtet.

Wie die Figur 4 gut erkennen lässt, ist bei dieser Ausführungsform das die Dehnhülse 4 tragende Halteteil 19 in der Weise ausgebildet, dass die Druckkammer 5 an ihrem hinteren Ende einen Absatz 20 des Halteteils 19 hintergreift. Dies hat zur Folge, dass bei einem Druckaufbau innerhalb der Druckkammer 5 eine Axialkraft F auf den Absatz 20 wirkt, welche das Halteteil 19 mit der Dehnhülse 4 nach vorne drückt und im Ergebnis wiederum die Spannhülse 8 gegen die Überwurfmutter 9 gepresst wird. Es wird somit das gleiche Ergebnis erzielt wie durch die radiale Verbreiterung am vorderen Ende der Druckkammern 5 bei den zuvor beschriebenen zweiten und dritten Ausführungsformen.

## Patentansprüche

1. Dehnspannfutter mit einem im wesentlichen formsteifen Futterkörper (2), der an seinem einen axialen Ende eine Dehnbüchse (4) trägt, welche eine zentrale Aufnahme (7) für ein zu spannendes Bauteil (5) bildet und außenseitig von wenigstens einer Druckkammer (5) begrenzt ist, die mit einem Hydraulikmittel beaufschlagbar ist, um die Dehnbüchse (4) elastisch nach innen zu verformen, **dadurch gekennzeichnet, dass** in die zentrale Aufnahme (7) eine Spannhülse (8) eingesetzt ist, welche in radialer Richtung elastisch verformbar ist, indem die Dehnspannbüchse (4) durch Beaufschlagung mit Hydraulikmittel nach innen verformt wird, und der Spannhülse (8) ein Stellglied (9) zugeordnet ist, um die Spannhülse (8) axial in der Aufnahme (7) zu verstellen, wobei die Spannhülse (8) an ihrer Außenfläche Eingriffsflächen aufweist, die mit entsprechenden Gegenflächen der Aufnahme (7) derart zusammen wirken, dass die Spannhülse (8) elastisch nach innen verformt wird, wenn sie axial in den Futterkörper (2) bewegt wird.

2. Dehnspannfutter nach Anspruch 1, **dadurch gekennzeichnet, dass** die zentrale Aufnahme (7) von dem freien Ende des Futterkörpers (2) in Richtung des spindelseitigen Endes konusartig zulaufend ausgebildet ist.

3. Dehnspannfutter nach Anspruch 1 oder 2, **dadurch gekennzeichnet, dass** die Eingriffsflächen an der Außenseite der Spannhülse (8) auf einer zum spindelseitigen Ende hin zulaufenden Konusfläche liegen und die Außenfläche insbesonderekonusförmig ausgebildet ist.

4. Dehnspannfutter nach Anspruch 2 und 3, **dadurch gekennzeichnet, dass** die Konuswinkel von Spannhülse (8) und Aufnahme (7) übereinstimmend sind.

5. Dehnspannfutter nach einem der vorherigen Ansprüche, **dadurch gekennzeichnet, dass** als Stellglied eine auf den Futterkörper (2) aufgeschraubte und mit der Spannhülse (8) in Eingriff stehende Überwurfmutter (9) vorgesehen ist.

6. Dehnspannfutter nach einem der vorherigen Ansprüche, **dadurch gekennzeichnet, dass** die wenigstens eine Druckkammer (4) an ihrem zum freien Ende des Futterkörpers (2) weisenden Ende eine Verbreiterung in radialer Richtung aufweist.

7. Dehnspannfutter nach Anspruch 6, **dadurch gekennzeichnet, dass** der Querschnitt der wenigstens einen Druckkammer (4) zum freien Ende des Futterkörpers (2) hin kontinuierlich zunimmt.

8. Dehnspannfutter nach einem der Ansprüche 1 bis 5, **dadurch gekennzeichnet, dass** die Dehnhülse (4) in dem Futterkörper (2) verschiebbar gehalten ist und die mindestens eine Druckkammer (5) an ihrem spindelseitigen Endbereich die Dehnbüchse (4) hintergreift, so dass diese axial zum freien Ende des Futterkörpers (2) gegen das stellglied (9) gedrückt wird, wenn in der Druckkammer (5) ein Druck aufgebaut wird.

9. Verfahren zur Betätigung eines Dehnspannfutters nach einem der Ansprüche 1 bis 8, **dadurch gekennzeichnet, dass** zum Spannen eines Werkzeugschaftes (5) mit einem vorgegebenen Durchmesser die Spannhülse (8) mittels des Stellglieds (9) in der Aufnahme (7) des Futterkörpers (2) so positioniert wird, dass der Innendurchmesser der Spannhülse (8) zum Schaftdurchmesser korrespondiert und der Werkzeugschaft (5) mit wenig Spiel in die Spannhülse (8) geschoben werden kann, und im Anschluss daran der Spannvorgang allein durch Druckbeaufschlagung der Druckkammer (5) erfolgt.

## Claims

1. Expanding clamping chuck having an essentially rigid chuck body (2), that carries at its one axial end an expansion sleeve (4), that forms a central receptacle (7) for a workpiece (S) to be clamped and is delimited to the exterior side by at least one pressure chamber (5), to which a hydraulic medium can be applied in order to elastically deform the expansion sleeve (4) inwardly, **characterized in that** a clamping sleeve (8) is inserted into the central receptacle (7), which is elastically deformable in the radial direction by deforming the expansion sleeve (4) inwardly by the application of hydraulic medium, and that an actuator (9) is associated to the claming sleeve (8) in order to axially displace the clamping sleeve (8) in the receptacle (7), wherein the clamping sleeve (8) is provided at its outer surface with engagement faces, that co-act with corresponding counterfaces of the receptacle (7) in such a way, that the clamping sleeve (8) is elastically deformed inwardly, when it is axially moved into the chuck body (2).

2. Expanding clamping chuck according to claim 1, **characterized in that** the central receptacle (7) converges conically from the free end of the chuck body (2) in the direction of the spindle-side end.

3. Expanding clamping chuck according to claim 1 or 2, **characterized in that** the engagement faces at the outer surface of the clamping sleeve (8) are arranged on a cone face converging to the spindle-side end and the outer surface in particular has the form of a cone.

4. Expanding clamping chuck according to claim 2 and 3, **characterized in that** the cone angle of the clamping sleeve (8) and the receptacle (7) correspond to each other.

5. Expanding clamping chuck according to any of the preceding claims, **characterized in that** a union nut (9) is provided as the actuator, which is screwed on the chuck body (2) and is in engagement with the clamping sleeve (8).

6. Expanding clamping chuck according to any of the preceding claims, **characterized in that** the at least one pressure chamber (5) has at its end facing to the free end of the chuck body (2) an enlargement in radial direction.

7. Expanding clamping chuck according to claim 6, **characterized in that** the cross section of the at least one pressure chamber (7) increases continuously to the free end of the chuck body (2).

8. Expanding clamping chuck according to any of claims 1 to 5, **characterized in that** the expansion sleeve (4) is held displaceably in the chuck body (2) and the at least one pressure chamber (5) grips at its spindle-side end region behind the expansion sleeve (4), so that the expansion sleeve (4) is pressed axially to the free end of the chuck body (2) against the actuator (9) when a pressure is built-up in the pressure chamber (5).

9. Method for actuating an expanding clamping chuck according to any of the claims 1 to 8, **characterized in that** for clamping a tool shank (S) having a defined diameter the clamping sleeve (8) is positioned by means of the actuator (9) in the receptacle (7) of the chuck body (2) in such a way, that the inside diameter of the clamping sleeve (8) corresponds to the shank diameter and the tool shank (5) can be inserted into the clamping sleeve (8) with few clearance, and in the following the clamping procedure is performed solely by pressurization of the pressure chamber (5).

## Revendications

1. Mandrin de serrage expansible avec un corps de mandrin (2) essentiellement sous une forme rigide qui porte une douille expansible (4) sur son extrémité axiale, laquelle forme un réceptacle central (7) pour une pièce de construction (5) à serrer et côté extérieur est délimitée par au moins une chambre de compression (5), qui peut être soumise à un fluide hydraulique dans le but de déformer la douille expansible (4) vers l'intérieur de manière élastique, **caractérisé en ce que** dans le réceptacle central (7) une douille de serrage (8) est ajustée, laquelle est déformable de manière élastique dans le sens radial, la douille de serrage expansible (4) étant déformée vers l'intérieur par l'injection d'un fluide hydraulique et un élément de commande (9) est appairé à la douille de serrage (8), dans le but de régler la douille de serrage (8) de manière axiale dans le réceptacle (7), sachant que la douille de serrage (8) présente des surfaces de prise sur sa surface extérieure, qui agissent en interaction avec les contre-surfaces correspondantes du réceptacle (7) de telle manière que la douille de serrage (8) et déformée de manière élastique vers l'intérieur lorsqu'elles est déplacée de manière axiale dans le corps de mandrin (2).

2. Mandrin de serrage expansible selon revendication 1, **caractérisé en ce que** le réceptacle central (7) de l'extrémité libre du corps de mandrin (2) est formé en se terminant en forme de cône, en direction de l'extrémité du côté de la broche.

3. Mandrin de serrage selon revendication 1 ou 2, **caractérisé en ce que** les surfaces de prise sur le côté extérieur de la douille de serrage (8) se trouvent sur une surface prenant une forme conique vers l'extrémité de la broche et les surfaces extérieures sont formées en particulier en forme de cône.

4. Mandrin de serrage selon revendications 2 et 3 **caractérisé en ce que** l'angle conique de la douille de serrage (8) et le réceptacle (7) sont concordants.

5. Mandrin de serrage selon l'une des revendications précédentes, **caractérisé en ce que**, en tant qu'élément de réglage un écrouraccord (9) vissé sur le corps de mandrin (2) et en prise avec la douille de serrage (7) est prévu.

6. Mandrin de serrage selon l'une des revendications précédente, **caractérisé en ce que** la chambre de pression minimum (4) présente sur son extrémité en direction de l'extrémité libre du corps de mandrin (2) un élargissement en direction radiale.

7. Mandrin de serrage selon revendication 6, **caractérisé en ce que** la coupe transversale de la chambre de pression minimum (4) augmente de manière continue vers l'extrémité libre du corps de mandrin (2).

8. Mandrin de serrage selon l'une des revendications 1 à 5, **caractérisé en ce que** la douille expansible (4) est maintenue de manière mobile dans le corps de mandrin (2) et la chambre de pression minimum (5) vient prendre par l'arrière la douille expansible (4) sur sa partie finale côté broche, de telle manière que celui-ci est comprimé contre l'élément de réglage (9) de manière axiale par rapport à l'extrémité libre du corps de mandrin (2), lorsqu'une pression est produite dans la chambre de pression (5).

9. Procédé pour l'actionnement d'un mandrin de serrage expansible, selon l'une des revendications 1 à 8, **caractérisé en ce que** pour le serrage d'un outil (5) avec un diamètre donné, la douille de serrage (8) au moyen de l'élément de réglage (9) soit positionnée dans le réceptacle (7) du corps de mandrin (2) de telle manière que le diamètre intérieur de la douille de serrage (8) corresponde au diamètre de tige et que l'outil (5) puisse être poussé avec peu de jeu dans la douille de serrage (8) et suite à cela le procédé de serrage s'effectue par l'action de la pression de la chambre de pression (5).
